(19) Europäisches Patentamt / European Patent Office / Office européen des brevets

(11) **EP 3 985 250 B1**

(12) **FASCICULE DE BREVET EUROPEEN**

(45) Date de publication et mention
de la délivrance du brevet:
**06.09.2023   Bulletin 2023/36**

(21) Numéro de dépôt: **21200465.9**

(22) Date de dépôt: **01.10.2021**

(51) Classification Internationale des Brevets (IPC):
**F03D 17/00** *(2016.01)*      **F03D 7/04** *(2006.01)*

(52) Classification Coopérative des Brevets (CPC):
**F03D 17/00; F03D 7/0204; F03D 7/0276;**
F05B 2260/80; F05B 2270/32; F05B 2270/8042;
Y02E 10/72

(54) **PROCÉDÉ DE DÉTERMINATION D'UN FACTEUR D'INDUCTION ENTRE UN PLAN DE MESURE ET LE PLAN DU ROTOR D'UNE ÉOLIENNE**

VERFAHREN ZUR BESTIMMUNG EINES INDUKTIONSFAKTORS ZWISCHEN EINER MESSEBENE UND DER EBENE DES ROTORS EINER WINDKRAFTANLAGE

METHOD FOR DETERMINING AN INDUCTION FACTOR BETWEEN A MEASURING PLANE AND THE PLANE OF THE ROTOR OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2020   FR 2010493**

(43) Date de publication de la demande:
**20.04.2022   Bulletin 2022/16**

(73) Titulaire: **IFP Energies nouvelles**
**92500 Rueil-Malmaison (FR)**

(72) Inventeurs:
• **NGUYEN, Hoai-Nam**
  **92852 RUEIL-MALMAISON CEDEX (FR)**
• **GUILLEMIN, Fabrice**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 253 838      EP-A1- 3 564 524
EP-A1- 3 650 687      EP-A1- 3 712 621

## Description

### Domaine technique

La présente invention concerne le domaine des énergies renouvelables et concerne plus particulièrement la mesure de la ressource des éoliennes, le vent, dans des objectifs de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré.

La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

### Technique antérieure

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LiDAR (acronyme de l'expression en langue anglaise « light détection and ranging » pouvant être traduite par télédétection par Laser). Le LiDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LiDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LiDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaitre la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaitre à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LiDAR en estimant précisément la vitesse du vent au niveau du rotor, c'est-à-dire dans le plan du rotor. Une telle application est décrite notamment dans la demande de brevet FR 3013777 (US 2015145253).

En outre, au cours de la dernière décennie, le comportement du vent formé en amont d'une éolienne, c'est-à-dire, la zone d'induction, a suscité un intérêt croissant. Au sein de la zone d'induction, le vent est freiné en raison de la présence et du fonctionnement de l'éolienne, qui prélève une partie de la puissance aérodynamique du vent. Une meilleure compréhension de la zone d'induction permet d'améliorer les stratégies de contrôle basées sur un capteur LiDAR et les évaluations de la puissance des éoliennes. Dans le premier cas, l'objectif est d'utiliser des mesures de vent en amont pour prédire la vitesse du vent sur le plan du rotor. Dans ce dernier cas, c'est pour établir le lien entre la puissance et la vitesse du courant libre, à savoir la vitesse du vent qu'il y aurait eu en un point correspondant à la position de la turbine (éolienne) en l'absence de l'éolienne. Pour ce travail, l'intérêt de la zone d'induction réside dans l'utilisation de mesures à proximité de la turbine pour estimer la vitesse effective du vent du rotor.

Dans le document « Emmanuel Simon Pierre Branlard and Alexander Raul Meyer Forsting. 'Using a cylindrical vortex model to assess the induction zone infront of aligned and yawed rotors'. In: EWEA Offshore 2015 Conférence. European Wind Energy Association (EWEA). 2015 », des formules analytiques pour le champ de vitesse induites par un modèle de sillage tourbillonnaire cylindrique sont appliquées pour évaluer la zone d'induction. Les résultats sont comparés à des simulations de disque d'actionneur pour différentes conditions de fonctionnement.

Dans le document « D Medici, Stefan Ivanell, J-À Dahlberg, and P Henrik Alfredsson. 'The upstream flow of a wind turbine: blockage effect'. In: Wind Energy 14.5 (2011), pp. 691-697 », les mesures en soufflerie sont utilisées pour étudier la zone d'induction de différentes éoliennes. De plus, les résultats ont été comparés à une expression analytique de la zone d'induction obtenue à partir d'un modèle de cylindre à vortex linéaire.

Dans le document « Eric Simley, Nikolas Angelou, Torben Mikkelsen, Mikael Sjöholm, Jakob Mann, and Lucy Y Pao. 'Characterization of wind velocities in the upstream induction zone of a wind turbine using scanning continuous-wave lidars'. In: Journal of Renewable and Sustainable Energy 8.1 (2016), p. 013301 », la zone d'induction d'une éolienne est étudiée à l'aide de capteur LIDAR à ondes continues synchronisées. Il a été montré que l'écart type de la composante de vitesse longitudinale est relativement inchangé lorsque le vent se rapproche du rotor, alors que l'écart type de la composante verticale et latérale augmente légèrement.

Dans le document « Niels Troldborg and Alexander Raul Meyer Forsting. 'A simple model of the wind turbine induction zone derived from numerical simulations'. In: Wind Energy 20.12 (2017), pp. 2011- 2020 », la zone d'induction en amont de différentes éoliennes est étudiée en combinant des simulations de Navier Stokes à l'état stationnaire et une approche par disque d'actionneur. Il a été montré que, pour des distances au-delà d'une fois le rayon du rotor en amont du rotor, la vitesse induite est similaire et indépendante de la géométrie du rotor.

Pour toutes les approches de la littérature, il convient de souligner que la zone d'induction est calculée/estimée hors ligne à l'aide de simulations ou de données expérimentales. De plus, la zone d'induction est supposée implicitement constante pour une vitesse de vent donnée, une fois identifiée. Apparemment, cette zone d'induction donne une information très moyenne sur le déficit de vitesse du vent, car il est clair que la zone d'induction est fonction des angles de pales et de lacet pour une vitesse de vent donnée. C'est pourquoi, ces méthodes ne permettent pas de déterminer en ligne et en continu des phénomènes physiques mis en oeuvre dans la zone d'induction.

En outre, la demande de brevet FR3088434 (US2020/0149512) divulgue un procédé permettant de déterminer un facteur d'induction en ligne au moyen d'un capteur LiDAR placé sur une éolienne. Pour ce procédé, on réalise des mesures de la vitesse du vent en plusieurs plans de mesure au moyen du capteur LiDAR, puis on détermine des facteurs d'induction entre les plans de mesure au moyen des mesures et d'un premier filtre de Kalman linéaire, et on en déduit, au moyen d'un deuxième filtre de Kalman linéaire le facteur d'induction entre un plan de mesure et le plan du rotor de l'éolienne. Toutefois, la mise en oeuvre de ce procédé nécessite de connaître la distance des plans de mesure par rapport au plan du rotor de l'éolienne. Or les distances de ces plans de mesure peuvent être imposées par l'utilisateur du LiDAR, peuvent être différentes d'un capteur LiDAR à l'autre, et peuvent être inconnues. Par conséquent, pour ces situations, le procédé décrit dans cette demande de brevet n'est pas adapté.

Le document d'antériorité EP3564524A1 représente un autre exemple de procédé de détermination d'un facteur d'induction.

**Résumé de l'invention**

L'invention a pour but de déterminer en temps réel, le facteur d'induction entre un plan de mesure et le plan du rotor, en toute situation, pour toute distance de mesure, dans le cas de mesures effectuées par un LiDAR positionné préférentiellement sur une nacelle d'éolienne, et orienté préférentiellement de manière à être aligné avec la direction de l'axe du rotor, mais étant robuste à des désalignements en lacet, tangage et roulis par rapport à cette direction. La présente invention concerne un procédé de détermination d'un facteur d'induction entre le plan du rotor et un plan de mesure, mettant en oeuvre une étape de mesure de la vitesse du vent en au moins deux plans de mesure, une étape de détermination de la vitesse du vent dans le plan du rotor par un filtre de Kalman à partir des mesures, et une étape de mesure du facteur d'induction par un filtre de Kalman adaptatif à partir des mesures et de la vitesse du vent dans le plan du rotor. Les deux filtres de Kalman permettent la détermination en continu du facteur d'induction. L'approche n'impose pas de distance de mesure fixée, permettant ainsi un paramétrage du LiDAR non contraint pour le choix des distances de mesures.

L'invention concerne un procédé de détermination d'un facteur d'induction entre un plan de mesure et le plan du rotor d'une éolienne, ladite éolienne étant équipée d'un capteur LiDAR réalisant une mesure relative à la vitesse du vent en au moins deux plans de mesure distants de ladite éolienne, ledit facteur d'induction du vent représentant un coefficient de freinage du vent entre deux points espacés en amont de ladite éolienne, le freinage résultant du fonctionnement de ladite éolienne dans le champ de vent. Dans ce but, le procédé met en oeuvre les étapes suivantes :

 a. On mesure la vitesse du vent en au moins deux plans de mesure distants de ladite éolienne au moyen dudit capteur LiDAR ;
 b. On détermine la vitesse du vent dans ledit plan du rotor au moyen desdites mesures de ladite vitesse du vent en au moins deux plans de mesure et d'un filtre de Kalman ; et
 c. On détermine ledit facteur d'induction du vent entre un plan de mesure et ledit plan du rotor au moyen de ladite vitesse de vent déterminée dans ledit plan du rotor, de la mesure de la vitesse du vent dans ledit plan de mesure considéré et au moyen d'un filtre de Kalman adaptatif.

Selon un mode de réalisation, on détermine la vitesse du vent dans ledit plan du rotor au moyen d'un filtre de Kalman appliqué à une fonction paramétrique qui relie la vitesse du vent et la distance du plan de mesure.

Avantageusement, ladite fonction paramétrique est une fonction polynomiale, de préférence une fonction polynomiale d'ordre deux, ou une fonction affine par morceaux.

Conformément à une mise en oeuvre, le modèle d'état mis en oeuvre dans ledit filtre de Kalman s'écrit :

$$\begin{cases} x(k) & = x(k-1) + \mu(k) \\ y(k) & = Hx(k) + \epsilon(k) \end{cases}$$

avec k le temps discret, x le vecteur comprenant les coefficients de ladite fonction paramétrique, y le vecteur des vitesses du vent dans lesdits au moins deux plans de mesure, H une matrice dépendante des distances desdits au moins deux plans de mesure et définie en fonction de ladite fonction paramétrique, $\mu$ la variation des coefficients de ladite fonction paramétrique, et $\epsilon$ un vecteur des bruits de mesure.

De manière avantageuse, ladite fonction paramétrique est une fonction polynomiale qui s'écrit :

$$f(r_i) = c_2 r_i^2 + c_1 r_i + c_0$$

avec $r_i$, la distance du plan de mesure i, f ladite fonction paramétrique, $C_0$, $C_1$, $C_2$

$$H = \begin{bmatrix} r_1^2 & r_1 & 1 \\ ... & ... & ... \\ r_n^2 & r_n & 1 \end{bmatrix}$$

avec n le nombre de plans de mesures pour lequel des mesures ont été réalisées.

Selon un aspect, on détermine ledit facteur d'induction en appliquant ledit filtre de Kalman adaptatif au modèle d'état suivant:

$$\begin{cases} a_{r_i,r_j}(k) & = a_{r_i,r_j}(k-1) + \xi(k-1) \\ u_{r_i}(k) & = u_{r_j}(k)a_{r_i,r_j}(k) + \nu(k) \end{cases}$$

avec $v(k) = -\varepsilon_{r_i}(k) + \varepsilon_{r_j}(k)a_{r_i,r_j}(k)$ et $k$ le temps discret, $r_i$, la distance du plan de mesure $i$, $r_j$ la distance du plan de mesure $j$, $a_{r_i,r_j}$ le facteur d'induction entre le plan de mesure $i$ et le plan de mesure $j$, $u_{r_i}$ la vitesse du vent dans le plan $i$, $u_{r_j}$ la vitesse du vent dans le plan $j$, $\xi$ la variation du facteur d'induction dans le temps, $\varepsilon_{r_i}$ le bruit de la vitesse du vent dans le plan de mesure $i$ $u_{r_i}$, $\varepsilon_{r_j}$ le bruit de la vitesse du vent dans le plan de mesure $j$ $u_{r_j}$.

De plus, l'invention concerne un procédé de contrôle d'une éolienne équipée d'un capteur LiDAR. Pour ce procédé on met en oeuvre les étapes suivantes :

a) on détermine ledit facteur d'induction entre un plan de mesure et le plan de rotor d'une éolienne au moyen du procédé selon l'une des caractéristiques précédentes ; et

b) on contrôle ladite éolienne en fonction dudit facteur d'induction entre le plan de mesure considéré et le plan de rotor de l'éolienne.

L'invention concerne également un procédé de diagnostic et/ou surveillance d'une éolienne équipée d'un capteur LiDAR. Pour ce procédé, on met en oeuvre les étapes suivantes :

a) on détermine un facteur d'induction du vent entre un plan de mesure et le plan de rotor d'une éolienne au moyen du procédé selon l'une des caractéristiques précédentes ;

b) on détermine la puissance aérodynamique prélevée au vent par ladite éolienne au moyen dudit facteur d'induction déterminé du vent entre un plan de mesure et le plan de rotor d'une éolienne ; et

c) on diagnostique et/ou surveille le fonctionnement de ladite éolienne au moyen de ladite puissance aérodynamique prélevée déterminée.

En outre, l'invention concerne un produit programme d'ordinateur comprenant des instructions de code agencés pour mettre en oeuvre les étapes d'un procédé selon l'une des caractéristiques précédentes, lorsque le programme est exécuté sur une unité de traitement dudit capteur LiDAR.

De plus, l'invention concerne un capteur LiDAR pour éolienne comprenant une unité de traitement mettant en oeuvre un procédé selon l'une des caractéristiques précédentes.

En outre, l'invention concerne une éolienne comportant un capteur LiDAR selon l'une des caractéristiques précédentes, ledit capteur LiDAR étant de préférence placé sur la nacelle de ladite éolienne ou dans le nez de l'éolienne.

D'autres caractéristiques et avantages des procédés et des systèmes selon l'invention, apparaîtront à la lecture de la description ci-après d'exemples non limitatifs de réalisations, en se référant aux figures annexées et décrites ci-après.

**Liste des figures**

La figure 1 illustre une éolienne équipée d'un capteur LiDAR selon un mode de réalisation de l'invention.

La figure 2 illustre les étapes du procédé de détermination d'un facteur d'induction du vent selon un mode de réalisation de l'invention.

La figure 3 illustre les étapes du procédé de contrôle d'une éolienne selon un mode de réalisation de l'invention.

La figure 4 illustre les étapes du procédé de diagnostic d'une éolienne selon un mode de réalisation de l'invention.

La figure 5 est une courbe du facteur d'induction en fonction du temps pour un exemple de réalisation pour un premier plan de mesure.

La figure 6 est une courbe du facteur d'induction en fonction du temps pour un exemple de réalisation pour trois plans de mesure.

**Description des modes de réalisation**

L'invention concerne un procédé de mesure de la ressource des éoliennes : le vent, en particulier dans des objectifs de contrôle (orientation, régulation de couple et de vitesse) et/ou de diagnostic et/ou de surveillance de l'éolienne, dans lequel on contrôle et/ou on surveille l'éolienne en fonction d'une détermination d'un facteur d'induction du vent, l'éolienne étant équipée d'un capteur LiDAR pour réaliser cette estimation.

Le facteur d'induction est un coefficient de freinage du vent dans la zone d'induction de l'éolienne. En effet, le vent est freiné dans la zone amont de l'éolienne par la présence de l'éolienne et son fonctionnement : en d'autres termes, la puissance prélevée par l'éolienne au vent, entraîne un freinage du vent en amont de l'éolienne. Ainsi le facteur d'induction est représentatif d'un phénomène physique, et donne une indication relative à la ressource de l'éolienne. Le facteur d'induction se calcule entre deux plans en amont de l'éolienne, par définition, il correspond au rapport des vitesses entre ces plans. En notant a le facteur d'induction, u la vitesse du vent, et d1 et d2 les distances respectives des deux plans considérés par rapport au plan du rotor, le facteur d'induction entre les plans situés aux distances d1 et d2 du plan du rotor peut s'écrire :

$$a_{d1,d2} = \frac{u_{d1}}{u_{d2}}$$

Lorsque un des plans considérés est le plan du rotor, on note d1 =0, et le facteur d'induction est le facteur d'induction entre un plan de mesure et le plan du rotor. Lorsque aucun des deux plans n'est le plan du rotor, alors le facteur d'induction est le facteur d'induction est le facteur d'induction entre plans de mesure. Dans la suite de la demande, on considère que le plan de rotor est un plan de mesure pour lequel la distance est nulle.

On peut noter que, dans la littérature, le facteur d'induction peut être défini par :

$$1 - a_{d1,d2} = \frac{u_{d1}}{u_{d2}}$$

Le procédé selon l'invention est également adapté à la définition de ce facteur d'induction, la deuxième définition du facteur d'induction pouvant se déduire par une simple soustraction par rapport à la première définition.

Selon l'invention, le capteur LiDAR permet de mesurer la vitesse du vent sur une pluralité (au moins deux) plans de mesure en amont de l'éolienne. Il existe plusieurs types de capteur LiDAR, par exemple les capteurs LiDAR scannés, LiDAR continus ou LiDAR pulsés. Dans le cadre de l'invention, on utilise de préférence un LiDAR pulsé. Cependant, les autres technologies de LiDAR peuvent être utilisées tout en restant dans le cadre de l'invention.

Le capteur LiDAR permet une mesure rapide. Par conséquent, l'utilisation d'un tel capteur, permet une détermination rapide en continu du facteur d'induction du vent. Par exemple, le taux d'échantillonnage du capteur LiDAR peut être compris entre 1 et 5Hz, voire plus dans le futur.

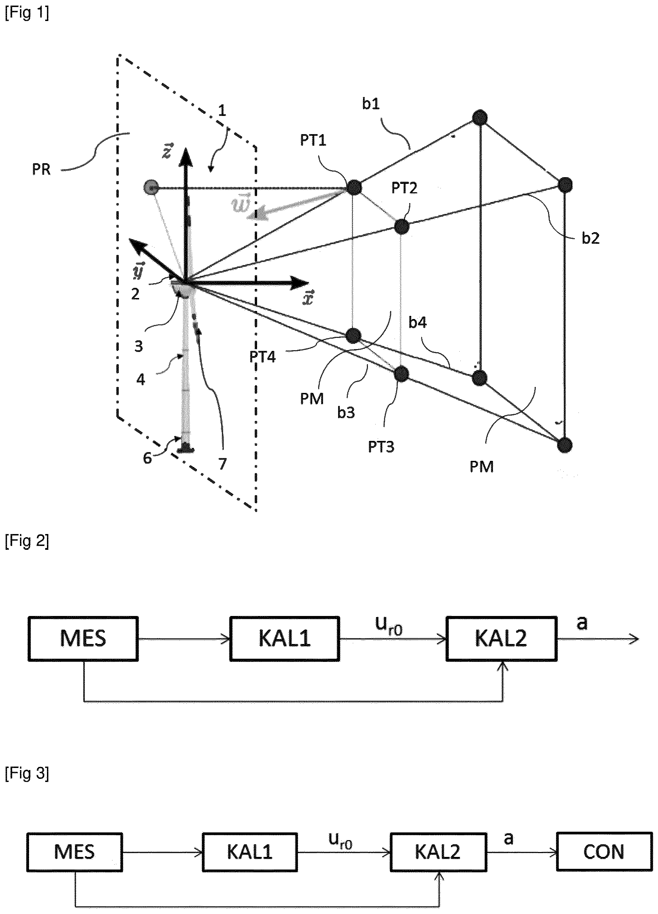

La figure 1 représente, de manière schématique et non limitative, une éolienne 1 à axe horizontal équipée d'un capteur LiDAR 2 pour le procédé selon un mode de réalisation de l'invention. Le capteur LiDAR 2 est utilisé pour mesurer la vitesse du vent à une distance donnée sur une pluralité de plans de mesure PM (seulement deux plans de mesure sont représentés). La connaissance en avance de la mesure de vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LiDAR 2. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. La plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

- un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;
- une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que des pales à angle variable ou des freins aérodynamiques ;

- une transmission, composée de deux axes (arbre mécanique du rotor et arbre mécanique de la machine électrique) reliés par une transmission (boite de vitesse) (non représentés).

Comme visible à la figure 1, qui est un exemple de réalisation d'un capteur LiDAR pulsé, le capteur LiDAR 2 utilisé comporte quatre faisceaux ou axes de mesures (b1, b2, b3, b4). De manière non limitative, le procédé selon l'invention fonctionne également avec un capteur LiDAR comportant un nombre quelconque de faisceaux. Le capteur LiDAR réalise une mesure ponctuelle en chaque point d'intersection d'un plan de mesure PM et d'un faisceau (b1, b2, b3, b4). Ces points de mesure sont représentés par des cercles noirs sur la figure 1 et notés PT1, PT2, PT3, PT4. Le traitement des mesures en ces points de mesure permet de déterminer la vitesse du vent dans les plans de mesure PM. Pour cela, on peut appliquer notamment le procédé de modélisation du vent décrit dans la demande de brevet FR3068139 (US 2020/0124026).

De préférence, le capteur LiDAR 2 peut être monté sur la nacelle 3 de l'éolienne 1, ou dans le nez de l'éolienne (extrémité amont du rotor).

Selon l'invention, le procédé de détermination d'un facteur d'induction du vent entre le plan de mesure et le plan de rotor d'une éolienne comporte les étapes suivantes :

1) Mesure de la vitesse du vent dans des plans de mesure

2) Détermination de la vitesse du vent dans le plan du rotor

3) Détermination du facteur d'induction entre un plan de mesure et le plan du rotor

Ces étapes sont réalisées en temps réel. Ces étapes seront détaillées dans la suite de la description.

La figure 2 illustre, schématiquement et de manière non limitative les étapes du procédé selon un mode de réalisation de l'invention. La première étape est une étape de mesure (MES) de la vitesse du vent en plusieurs plans de mesure. La deuxième étape utilise les mesures et un filtre de Kalman (KAL1) pour déterminer la vitesse du vent dans le plan du rotor notée $u_{r0}$. La troisième étape utilise la vitesse du vent dans le plan du rotor $u_{r0}$ et les mesures pour déterminer, au moyen d'un filtre de Kalman adaptatif (KAL2) le facteur d'induction du vent entre un plan de mesure et le plan du rotor, le facteur d'induction est noté a.

Dans la suite de la description, on appelle la distance du plan de mesure, la distance séparant le plan de mesure et le plan du rotor. Il s'agit par conséquent d'une distance longitudinale (selon l'axe x de la figure 1).

1) Mesure de la vitesse du vent

Lors de cette étape, on mesure, en continu, la vitesse du vent en au moins deux plans de mesure distants de l'éolienne au moyen du capteur LiDAR. Ainsi, la vitesse de vent peut être connue en amont de l'éolienne en au moins deux plans de mesures situés à des distances différentes de l'éolienne. En d'autres termes, la vitesse de vent peut être connue à au moins deux distances du plan du rotor de l'éolienne. Pour cette étape, on considère les trois composantes du vent (longitudinale, latérale et verticale), ainsi que les variations de la vitesse du vent dans le plan de mesure (par exemple la vitesse du vent augmente avec l'altitude). Etant donné que le procédé selon l'invention ne nécessite pas de connaître la distance entre les plans de mesure et le plan du rotor, ces distances peuvent être non imposées pour la mise en oeuvre du procédé selon l'invention.

Selon un mode de réalisation de l'invention, on réalise la mesure de la vitesse du vent en au moins trois plans de mesure, de manière à augmenter la précision de la connaissance du vent en amont de l'éolienne et par conséquent la précision de l'estimation du facteur d'induction du vent au niveau du plan du rotor.

Conformément à une mise en oeuvre de réalisation de l'invention, les plans de mesure peuvent être, par exemple éloignés d'une distance longitudinale (selon l'axe x de la figure 1) comprise entre 50 et 400 m du plan du rotor. Ainsi, il est possible de déterminer l'évolution de la vitesse du vent sur une longue distance en amont de l'éolienne, ce qui permet également d'augmenter la précision de l'estimation des facteurs d'induction du vent.

2) Détermination de la vitesse du vent dans le plan du rotor

Lors de cette étape, on détermine la vitesse du vent dans le plan du rotor au moyen des mesures de la vitesse de vent en au moins deux plans de mesure obtenues à l'étape 1 et au moyen d'un filtre de Kalman. L'application du filtre de Kalman permet d'obtenir un observateur d'état.

Selon un mode de réalisation de l'invention, on peut mettre en oeuvre cette étape au moyen d'un filtre de Kalman appliqué à une fonction paramétrique qui relie la vitesse du vent et la distance du plan de mesure. En d'autres termes, la fonction paramétrique est une fonction qui a pour variable la distance du plan de mesure et qui détermine la vitesse du vent pour ce plan de mesure. Cette fonction est dite paramétrique car elle dépend d'au moins un coefficient qui est déterminé par le filtre de Kalman lors de cette étape. L'au moins un coefficient est variable dans le temps. Une fois que le filtre de Kalman a déterminé l'au moins un coefficient de la fonction paramétrique, on applique cette fonction pour le plan du rotor, c'est-à-dire pour une distance nulle, pour déterminer la vitesse du vent dans le plan du rotor.

Selon une mise en oeuvre de ce mode de réalisation, la fonction paramétrique peut être de tout type, par exemple une fonction polynomiale, de préférence une fonction polynomiale de l'ordre deux, une fonction affine par morceaux, etc.

Conformément à une mise en oeuvre de ce mode de réalisation, le modèle d'état mis en oeuvre dans le filtre

$$\begin{cases} x(k) & = x(k-1) + \mu(k) \\ y(k) & = Hx(k) + \epsilon(k) \end{cases}$$

de Kalman pour cette étape peut s'écrire de la forme : avec k le temps discret, x le vecteur comprenant les coefficients de ladite fonction paramétrique, y le vecteur des vitesses du vent dans lesdits au moins deux plans de mesure, H une matrice dépendante des distances desdits au moins deux plans de mesure et définie en fonction de ladite fonction paramétrique, $\mu$ la variation des coefficients de ladite fonction paramétrique, et $\epsilon$ un vecteur des bruits de mesure.

Pour l'exemple de réalisation, pour lequel ladite fonction paramétrique est une fonction polynomiale d'ordre

$$f(r_i) = c_2 r_i^2 + c_1 r_i + c_0$$

deux, cette fonction paramétrique f peut s'écrire : avec $r_i$ la distance du plan de mesure i (avec $r_i=r_0=0$ si on considère le plan du rotor), $C_0$, $C_1$, $C_2$ les coefficients de ladite fonction paramétrique. Dans ce cas,

$$H = \begin{bmatrix} r_1^2 & r_1 & 1 \\ ... & ... & ... \\ r_n^2 & r_n & 1 \end{bmatrix}$$

on peut écrire la matrice H de la forme : avec n le nombre de plans de mesures pour lequel des mesures ont été réalisées.

$$u_{ri}(k) = \begin{bmatrix} r_i^2 & r_i & 1 \end{bmatrix} \begin{bmatrix} c_2(k) \\ c_1(k) \\ c_0(k) \end{bmatrix}$$

Dans ce cas, on peut écrire : avec $u_{ri}$ la vitesse du vent dans le plan de mesure i.

En considérant que la vitesse du vent dans le plan de mesure comporte des bruits $\epsilon_{ri}(k)$, un modèle peut s'écrire :

$$u_{ri}(k) = \begin{bmatrix} r_i^2 & r_i & 1 \end{bmatrix} \begin{bmatrix} c_2(k) \\ c_1(k) \\ c_0(k) \end{bmatrix} + \epsilon_{ri}(k)$$

En supposant que les variations des coefficients de la fonction paramétrique sont faibles, on peut écrire :

$$\begin{bmatrix} c_2(k) \\ c_1(k) \\ c_0(k) \end{bmatrix} = \begin{bmatrix} c_2(k-1) \\ c_1(k-1) \\ c_0(k-1) \end{bmatrix} + \mu(k)$$

avec $\mu$ la variation des coefficients.

En définissant :

$$x(k) = \begin{bmatrix} c_2(k) \\ c_1(k) \\ c_0(k) \end{bmatrix}$$

$$H = \begin{bmatrix} r_1^2 & r_1 & 1 \\ ... & ... & ... \\ r_n^2 & r_n & 1 \end{bmatrix}$$

Et

$$y(k) = [u_1(k)\ u_2(k)\ \ldots\ u_{10}(k)]^T$$

$$\epsilon(k) = [\epsilon_1(k)\ \epsilon_2(k)\ \ldots\ \epsilon_{10}(k)]^T$$

On obtient le modèle d'état illustré ci-dessus :

$$\begin{cases} x(k) & = x(k-1) + \mu(k) \\ y(k) & = Hx(k) + \epsilon(k) \end{cases}$$

Dans la suite, on décrit la détermination du vecteur d'état x pour cet exemple au moyen d'un filtre de Kalman. Un tel filtre fournit la solution du problème suivant :

$$\min_{x(k)} J(k)$$

avec

$$J(k) = x(0) - \overline{x}(0))^T P_0^{-1} (x(0) - \overline{x}(0)) + \sum_{i=1}^{\kappa} \left( \eta(j-1)^T Q^{-1} \eta(k-1) + \mu(j)^T R^{-1} \mu(j) \right)$$

$P_0$, Q, R sont des matrices de pondération de dimensions appropriées, $\overline{x}(0)$ est la valeur moyenne de l'état initial x(0). En rappelant que :

$$\eta(k-1) = x(k) - x(k-1)$$

et

$$\mu(k) = y(k) - Hx(k)$$

On peut alors poser les hypothèses suivantes, qui concernent principalement une interprétation mathématique pour $P_0$, Q et R.

- x(0) est un vecteur aléatoire non corrélé aux bruits $\eta(k)$ et $\mu(k)$.
- x(0) a une moyenne connue $\overline{x}(0)$ avec $P_0$ comme matrice de covariance définie par :

$$P_0 = E[(x(0) - \overline{x}(0))(x(0) - \overline{x}(0))^T]$$

- $\eta(k)$ et $\mu(k)$ sont des bruits blancs à moyenne nulle et non corrélés avec des matrices de covariance Q et R, respectivement :

$$E[\eta(k)\eta(j)^T] = \begin{cases} Q \ si \ k = j \\ 0 \ si \ k \neq j \end{cases}$$

$$E[\mu(k)\mu(j)^T] = \begin{cases} R \ si \ k = j \\ 0 \ si \ k \neq j \end{cases}$$

$$E[\eta(k)\mu(j)^T] = 0 \ pour \ tous \ k, j$$

On adopte également les notations suivantes :

- $\hat{x}(k|k - 1)$ est l'estimation du vecteur x(k) étant donné les mesures réalisées jusqu'au temps k-1,
- $\hat{x}(k|k)$ est l'estimation vecteur x(k) étant donné les mesures réalisées jusqu'au temps k,
- $P(k|k- 1)$ est la matrice de covariance du vecteur x(k) étant donné les mesures réalisées jusqu'au temps k-1,
- $P(k|k)$ est la matrice de covariance du vecteur x(k) étant donné les mesures réalisées jusqu'au temps k.

Ensuite, l'algorithme du filtre de Kalman peut être résumé par les deux systèmes d'équations ci-dessous : Equations de mise à jour temporelle :

$$\begin{cases} \hat{x}(k|k - 1) & = \hat{x}(k - 1|k - 1) \\ P(k|k - 1) & = P(k - 1|k - 1) + Q \end{cases}$$

Equations de mise à jour des mesures :

$$\begin{cases} K(k) & = P(k|k - 1)H^T \left(P(k|k - 1) + HRH^T\right)^{-1} \\ \hat{x}(k|k) & = \hat{x}(k|k - 1) + K(k)\left(y(k) - H\hat{x}(k|k - 1)\right) \\ P(k|k) & = (I - K(k))\,P(k|k - 1) \end{cases}$$

Ainsi, par ces étapes, l'estimation $\hat{x}(k|k)$ du vecteur x peut être déterminée, ce qui implique que les coefficients de la fonction paramétrique peuvent être déterminés. Ainsi, il est possible de déterminer la vitesse du vent dans le plan du rotor $u_{r0}$ en appliquant la formule : $u_{r0} = [0\ 0\ 1]\hat{x}(k|k)$ (cette formule correspond au mode de réalisation de la fonction paramétrique polynomiale d'ordre deux pour la valeur $r_i$=0, et cette formule doit être adaptée en fonction de la fonction paramétrique utilisée).

3) Détermination du facteur d'induction entre un plan de mesure et le plan du rotor

Lors de cette étape, on détermine, en temps réel, le facteur d'induction du vent entre un des plans de mesures, pour lesquels on a mesuré la vitesse du vent, et le plan du rotor. Ainsi, on peut représenter l'évolution du vent au niveau du rotor, en prenant en compte des phénomènes physiques, en particulier le freinage du vent. Selon l'invention, on détermine le facteur d'induction du vent entre un plan de mesure et le plan du rotor au moyen de la vitesse du vent dans le plan du rotor obtenu à l'étape 2, des mesures de la vitesse du vent dans au moins deux plans de mesure obtenues à l'étape 1 et au moyen d'un filtre de Kalman, notamment un filtre de Kalman adaptatif. L'application du filtre de Kalman permet d'obtenir un observateur d'état. Le filtre de Kalman adaptatif permet une adaptation de la matrice de covariance du bruit en fonction de la vitesse du vent. Ainsi, le filtre est performant sur une large gamme de vitesse du vent. En outre, le filtre de Kalman adaptatif est robuste vis-à-vis des variations de la vitesse du vent.

Etant donné que la vitesse du vent est connue dans au moins deux plans de mesure et dans le plan du rotor, on pourrait directement utiliser l'équation de définition du facteur d'induction pour le déterminer : $a_{d1,d2} = \dfrac{u_{d1}}{u_{d2}}$ . Toutefois, cette méthode présente deux inconvénients : elle ne donne aucune information sur la qualité de l'estimation, alors que les vitesses du vent sont estimées avec leurs intervalles de confiance, et pour des faibles vitesses du vent, on peut avoir un problème de stabilité numérique.

Selon un mode de réalisation de l'invention, on peut déterminer le facteur d'induction du vent en appliquant le filtre de Kalman adaptatif au modèle d'état suivant :

$$
\begin{cases}
a_{r_i,r_j}(k) & = a_{r_i,r_j}(k-1) + \xi(k-1) \\
u_{r_i}(k) & = u_{r_j}(k)a_{r_i,r_j}(k) + \nu(k)
\end{cases}
$$

avec $v(k) = -\varepsilon_{r_i}(k) + \varepsilon_{r_j}(k)a_{r_i,r_j}(k)$ et k le temps discret, $r_i$ la distance du plan de mesure i par rapport au plan du rotor (avec $r_i = r_0 = 0$ si on considère le plan du rotor), $r_j$ la distance du plan de mesure j par rapport au plan du rotor (avec $r_j = r_0 = 0$ si on considère le plan du rotor), $a_{ri,rj}$ le facteur d'induction entre le plan de mesure i et le plan de mesure j (si i=0 ou j=0, alors le plan considéré est le plan du rotor), $u_{ri}$ la vitesse du vent dans le plan de mesure i (avec $r_i = r_0 = 0$ si on considère le plan du rotor), $u_{rj}$ la vitesse du vent dans le plan de mesure j (avec $r_j = r_o = 0$ si on considère le plan du rotor), $\xi$ la variation du facteur d'induction dans le temps, $\varepsilon_{r_i}$ le bruit de la vitesse du vent dans le plan de mesure i $u_{ri}$, $\varepsilon_{r_j}$ le bruit de la vitesse du vent dans le plan de mesure j $u_{rj}$.

En effet, le filtre de Kalman adaptatif peut être mis en oeuvre au moyen des différentes étapes décrites ci-dessous.

On peut écrire l'équation du facteur d'induction :

$$
u_{r_j}(k)a_{r_i,r_j}(k) = u_{r_i}(k)
$$

Etant donné que les vitesses de vent contiennent du bruit, un modèle plus réaliste peut s'écrire :

$$
(u_{r_j}(k) + \epsilon_{r_j}(k))a_{r_i,r_j}(k) = u_{r_i}(k) + \epsilon_{r_i}(k)
$$

avec $\varepsilon_{r_i}$ le bruit de la vitesse du vent dans le plan de mesure i $u_{ri}$, $\varepsilon_{r_j}$ le bruit de la vitesse du vent dans le plan de mesure j $u_{rj}$

On peut alors définir :

$$
\nu(k) = -\epsilon_{r_i}(k) + \epsilon_{r_j}(k)a_{r_i,r_j}(k)
$$

Ce qui permet d'écrire :

$$u_i(k) = u_{r_j}(k)a_{r_i,r_j}(k) + \nu(k)$$

On peut supposer que les bruits $\varepsilon_{r_i}$ et $\varepsilon_{r_j}$ ne sont pas corrélés (en d'autres termes on peut écrire : $E[\varepsilon_{r_i}(k)\varepsilon_{r_j}(k)]$ = 0). Dans ce cas, la variance de $v(k)$ peut être :

$$R_\nu(k) = R_{\varepsilon_{r_i}} + R_{\varepsilon_{r_j}} a_{r_i,r_j}(k)^2$$

On peut noter que $R_v(k)$ dépend du temps (k étant le temps discret).

En supposant que la variation dans le temps du facteur d'induction est faible, on peut écrire : $a_{r_j,r_j}(k) = a_{r_i,r_j}(k-1) + \xi(k-1)$ avec $\xi$ la variation du facteur d'induction dans le temps.

En utilisant ces équations, on aboutit au modèle d'état tel que décrit ci-dessus :

$$\begin{cases} a_{r_i,r_j}(k) = a_{r_i,r_j}(k-1) + \xi(k-1) \\ u_{r_i}(k) = u_{r_j}(k)a_{r_i,r_j}(k) + \nu(k) \end{cases} .$$

On utilise alors un filtre de Kalman adaptatif car la matrice de covariance du bruit de mesure $R_v(k)$ est fonction du temps. Avec ce filtre de Kalman adaptatif, on peut déterminer $\widehat{a_{r_i,r_j}}(k|k)$ l'estimation du facteur d'induction entre les plans de mesure i et j étant donné les vitesses du vent dans les plans de mesure i et j à l'instant k, et ensuite, on considère $r_i$=0 pour le plan du rotor et j correspond au plan de mesure considéré parmi les plans de mesures ayant servi pour les mesures à l'étape 1.

## Applications

La présente invention concerne également un procédé de contrôle d'une éolienne équipée d'un capteur LiDAR. Pour ce procédé, on met en oeuvre les étapes suivantes :

- on détermine un facteur d'induction du vent entre un plan de mesure et le plan du rotor de l'éolienne au moyen du procédé de détermination du facteur d'induction selon l'une quelconque des combinaisons de variantes décrites précédemment ;

- on contrôle l'éolienne en fonction du facteur d'induction du vent entre le plan de mesure considéré et le plan du rotor.

La connaissance précise et en temps réel du facteur d'induction du vent permet un contrôle adapté de l'éolienne, en termes de minimisation des effets sur la structure de l'éolienne et de maximisation de la puissance récupérée. En effet, au moyen de ce contrôle, le capteur LiDAR permet de réduire les charges sur la structure, dont les pales et le mât représentent 54% du coût. Par conséquent, l'utilisation d'un capteur LiDAR permet d'optimiser la structure de l'éolienne, et donc de diminuer les coûts et la maintenance.

Conformément à une mise en oeuvre de l'invention, on peut commander l'angle d'inclinaison des pales et/ou le couple électrique de récupération du générateur de l'éolienne en fonction de la vitesse du vent. D'autres types de dispositif de régulation peuvent être utilisés.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La figure 3 illustre, schématiquement et de manière non limitative les étapes du procédé selon un mode de réalisation de l'invention. La première étape est une étape de mesure (MES) de la vitesse du vent en plusieurs plans de mesure. La deuxième étape utilise les mesures et un filtre de Kalman (KAL1) pour déterminer la vitesse du vent dans le plan du rotor notée $u_{r0}$. La troisième étape utilise la vitesse du vent dans le plan du rotor $u_{r0}$ et les mesures pour déterminer, au moyen d'un filtre de Kalman adaptatif (KAL2) le facteur d'induction du vent entre un plan de mesure et le plan du rotor, ce facteur d'induction est noté a. La quatrième étape concerne le contrôle (CON) de l'éolienne en fonction du facteur d'induction du vent a.

En outre, l'invention concerne un procédé de diagnostic et/ou de surveillance d'une éolienne équipée d'un capteur LiDAR, dans lequel on met en oeuvre les étapes suivantes :

- on détermine un facteur d'induction du vent entre un plan de mesure et le plan du rotor de l'éolienne au moyen du procédé de détermination du facteur d'induction selon l'une quelconque des combinaisons de variantes décrites précédemment,

- on détermine la puissance aérodynamique prélevée au vent par l'éolienne au moyen du facteur d'induction déterminé à l'étape précédente, et

- on diagnostique et/ou surveille le fonctionnement de l'éolienne en fonction de la puissance aérodynamique déterminée à l'étape précédente.

Le facteur d'induction traduisant le freinage du vent dû à la présence de l'éolienne dans le champ de vent, il est possible de déterminer à partir de ce facteur d'induction la puissance aérodynamique prélevée au vent par l'éolienne. Selon un mode de réalisation, on peut déterminer cette puissance aérodynamique $P_{aéro}$ prélevée au moyen du facteur d'induction a, de la vitesse du vent libre $V_{int}$ de la densité de l'air Ro, de la surface de l'éolienne $A_d$,

$$P_{aéro} = 2RoA_d V_{inf}^3 a(1-a)^2$$

La puissance aérodynamique prélevée donne des informations sur le fonctionnement de l'éolienne, c'est ce qui permet de réaliser un diagnostic et/ou une surveillance du fonctionnement de l'éolienne. L'idée de principale est de comparer la puissance électrique produite par l'éolienne à la puissance électrique théorique donnée par l'équation précédente, en approximant le rendement de la transmission et le rendement de la conversion électrique de la génératrice à 1.

En utilisant le rapport entre les deux puissances, on peut réaliser un diagnostic et/ou une surveillance du fonctionnement et du rendement aérodynamique effectif de l'éolienne.

Disposer d'une mise à jour en temps réel du facteur d'induction permet également de quantifier les charges aérodynamiques en poussée appliquées sur l'éolienne, et d'en déduire une estimation des dommages cumulés en fatigue. Selon une mise en oeuvre de l'invention, ceci peut être réalisé grâce à la relation qui lie le coefficient de poussée $C_T$ au facteur d'induction (Burton, Wind Energy handbook, ch.3.2), qui peut s'écrire $C_T=4a(1-a)$.

En outre, l'estimation en ligne du facteur d'induction peut permettre d'élaborer et mettre à jour en temps réel des modèles simplifiés de sillage d'éolienne. Ceci permet d'élaborer des diagnostics de fonctionnement à l'échelle d'une ferme éolienne, et d'identifier les zones à risques où des éoliennes se trouvent dans le sillage d'autres éoliennes, voire du diagnostic et du contrôle de ferme d'éolienne.

Dans ce cas, l'invention peut concerner un procédé de diagnostic et/ou de contrôle d'une ferme d'éolienne, dans lequel on met en oeuvre les étapes suivantes :

- on détermine un facteur d'induction du vent entre un plan de mesure et le plan du rotor de l'éolienne au moyen du procédé de détermination du facteur d'induction selon l'une quelconque des combinaisons de variantes décrites précédemment, pour au moins une éolienne d'une ferme d'éoliennes,

- on détermine un coefficient de poussée pour au moins une éolienne au moyen du facteur d'induction déterminé,

- on construit un modèle de sillage d'au moins une éolienne au moyen du coefficient de poussé déterminé, et

- on diagnostique et/ou contrôle le fonctionnement d'au moins une éolienne de la ferme d'éoliennes en fonction du modèle de sillage déterminé à l'étape précédente.

Selon un mode de réalisation, le modèle de sillage peut prendre la forme du modèle de Jensen, tel que décrit dans le document : « Wake effect modeling: A review of wind farm layout optimization using Jensen's model, Rabia Shakoor, Mohammad Yusri Hassan, Abdur Raheem, Yuan-Kang Wu, Renewable and Sustainable Energy Reviews, Volume 58, May 2016, Pages 1048-1059 ».

Le sillage donne des informations sur le fonctionnement de la ferme d'éoliennes, c'est ce qui permet de réaliser un diagnostic et/ou une surveillance du fonctionnement de l'éolienne. L'idée de principale est de comparer la puissance électrique produite par la ferme d'éoliennes à la puissance électrique théorique

La connaissance précise et en temps réel du sillage permet un contrôle adapté de la ferme d'éoliennes, en termes de maximisation de la récupération d'énergie éolienne par la ferme d'éolienne.

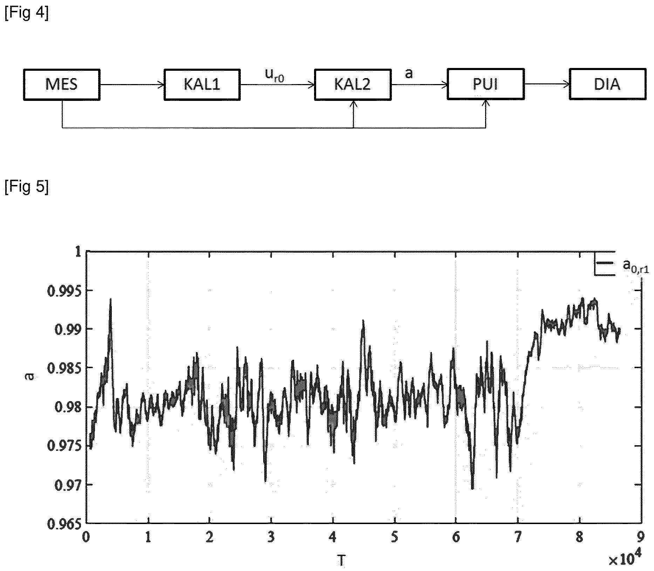

La figure 4 illustre, schématiquement et de manière non limitative les étapes du procédé selon un mode de réalisation de l'invention. La première étape est une étape de mesure (MES) de la vitesse du vent en plusieurs plans de mesure. La deuxième étape utilise les mesures et un filtre de Kalman (KAL1) pour déterminer la vitesse du vent dans le plan du rotor notée $u_{r0}$. La troisième étape utilise la vitesse du vent dans le plan du rotor $u_{r0}$ et les mesures pour déterminer, au moyen d'un filtre de Kalman adaptatif (KAL2) le facteur d'induction du vent entre un plan de mesure et le plan du rotor, ce facteur d'induction est noté a. La quatrième étape (PUI) détermine la puissance aérodynamique prélevée au vent $P_{aéro}$ à partir du facteur d'induction a entre un plan de mesure et le plan du rotor et une mesure de la vitesse du vent dans le plan de mesure. La cinquième étape (DIA) réalise le diagnostic ou la surveillance de l'éolienne en fonction de la puissance aérodynamique prélevée $P_{aéro}$.

De plus, l'invention concerne un produit programme d'ordinateur, qui comprend des instructions de code agencés pour mettre en oeuvre les étapes d'un des procédés précédemment décrits (procédé de détermination d'un facteur d'induction, procédé de contrôle, procédé de diagnostic et/ou de surveillance). Le programme est exécuté sur une unité de traitement du capteur LiDAR, ou sur tout moyen analogue, lié au capteur LiDAR ou à l'éolienne.

Selon un aspect, la présente invention concerne également un capteur LiDAR pour éolienne, qui comprend une unité de traitement configurée pour mettre en oeuvre un des procédés précédemment décrits (procédé de détermination d'un facteur d'induction, procédé de contrôle, procédé de diagnostic et/ou de surveillance).

Conformément à une mise en oeuvre de l'invention, le capteur LiDAR peut être un capteur LiDAR scanné, LiDAR continu ou LiDAR pulsé. De préférence, le capteur LiDAR est un capteur LiDAR pulsé.

L'invention concerne également une éolienne, notamment une éolienne offshore (en mer) ou onshore (sur terre) équipée d'un capteur LiDAR tel que décrit ci-dessus. Selon un mode de réalisation de l'invention, le capteur LiDAR peut être disposé sur la nacelle de l'éolienne ou dans le nez de l'éolienne (c'est-à-dire à l'extrémité du rotor de l'éolienne). Le capteur LiDAR est dirigé de telle sorte à réaliser une mesure du vent en amont de l'éolienne (c'est-à-dire avant l'éolienne et selon son axe longitudinal, désigné par l'axe x sur la figure 1). Selon un mode de réalisation, l'éolienne peut être conforme à l'éolienne illustrée en figure 1.

Pour le mode de réalisation du procédé de contrôle, l'éolienne peut comprendre des moyens de contrôle, par exemple le contrôle de l'angle de pitch (pouvant être traduit par angle de tangage) d'une pale de l'éolienne ou le couple électrique, pour mettre en oeuvre le procédé selon l'invention.

Pour le mode de réalisation du procédé de diagnostic et/ou de surveillance, l'éolienne peut comprendre des moyens de diagnostic et/ou de surveillance du fonctionnement de l'éolienne.

## Exemple d'application

Les caractéristiques et avantages du procédé selon l'invention ressortiront plus clairement à l'aide de l'exemple présenté ci-dessous.

Pour cet exemple, on utilise des mesures expérimentales d'un capteur LiDAR, et on détermine le facteur d'induction du vent entre un plan de mesure et le plan du rotor selon un mode de réalisation de l'invention. Le mode de réalisation de l'invention mis en oeuvre dans cet exemple est une fonction paramétrique polynomiale d'ordre deux. De plus, pour cet exemple, le capteur LiDAR mesure la vitesse du vent dans dix plans de mesures, à des distances respectives r1, r2, ..., r10 du plan du rotor.

Au moyen du procédé selon un mode de réalisation de l'invention, on détermine le facteur d'induction :

- Entre le plan de mesure à distance r1 et le plan du rotor,
- Entre le plan de mesure à distance r2 et le plan du rotor, la distance r2 étant supérieure à la distance r1, et
- Entre le plan de mesure à distance r3 et le plan du rotor, la distance r3 étant supérieure à la distance r2.

La figure 5 est une courbe du facteur d'induction a en fonction du temps T. La figure 5 illustre uniquement le facteur d'induction entre le plan de mesure à distance r1 et le plan du rotor, noté $a_{0,r1}$. Le procédé selon l'invention permet bien de déterminer le facteur d'induction entre le plan de mesure et le plan du rotor. On remarque en outre que ce facteur d'induction est proche de 1 et est variable dans le temps.

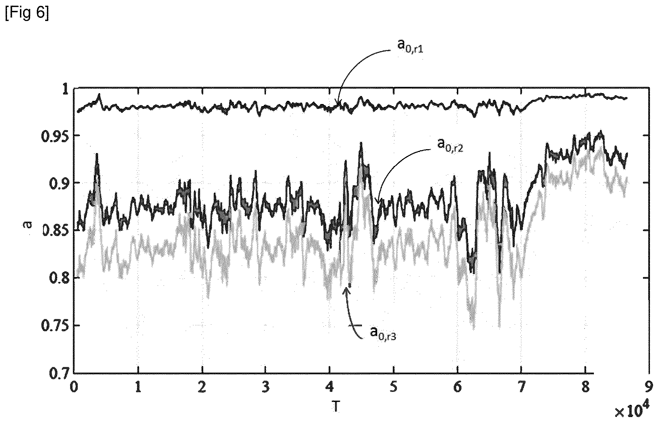

La figure 6 est une courbe du facteur d'induction a en fonction du temps T. La figure 6 illustre le facteur d'induction entre le plan de mesure à distance r1 et le plan du rotor noté $a_{0,r1}$, le facteur d'induction entre le plan de mesure à distance r2 et le plan du rotor noté $a_{0,r2}$ et le facteur d'induction entre le plan de mesure à distance r3 et le plan du rotor noté $a_{0,r3}$. Le procédé selon l'invention permet bien de déterminer le facteur d'induction entre le plan de mesure et le plan du rotor. On remarque que les trois facteurs d'induction sont variables dans le temps, et que plus le plan de mesure est proche du plan du rotor, plus le facteur d'induction est proche de 1, ce qui correspond bien au phénomène d'induction du vent. La détermination de plusieurs facteurs d'induction entre différents plans de mesure et le plan de rotor, peut permettre de déterminer pour chaque instant la variation du facteur d'induction en fonction de la distance par rapport au plan du rotor.

## Revendications

1. Procédé de détermination d'un facteur d'induction entre un plan de mesure (PM) et le plan du rotor (PR) d'une éolienne (1), ladite éolienne (1) étant équipée d'un capteur LiDAR (2) réalisant une mesure relative à la vitesse du vent en au moins deux plans de mesure (PM) distants de ladite éolienne, ledit facteur d'induction du vent représentant un coefficient de freinage du vent entre deux points espacés en amont de ladite éolienne, le freinage résultant du fonctionnement de ladite éolienne (1) dans le champ de vent, **caractérisé en ce qu'**on met en oeuvre les étapes suivantes :

    a. On mesure (MES) la vitesse du vent en au moins deux plans de mesure (PM) distants de ladite éolienne (1) au moyen dudit capteur LiDAR (2) ;
    b. On détermine la vitesse du vent dans ledit plan du rotor (PR) au moyen desdites mesures de ladite vitesse du vent en au moins deux plans de mesure (PM) et d'un filtre de Kalman (KAL 1) ; et
    c. On détermine ledit facteur d'induction du vent entre un plan de mesure (PM) et ledit plan du rotor (PR) au moyen de ladite vitesse de vent déterminée dans ledit plan du rotor (PR), de la mesure de la vitesse du vent dans ledit plan de mesure (PM) considéré et au moyen d'un filtre de Kalman adaptatif (KAL 2).

2. Procédé de détermination d'un facteur d'induction selon la revendication 1, dans lequel on détermine la vitesse du vent dans ledit plan du rotor (PR) au moyen d'un filtre de Kalman (KAL 1) appliqué à une fonction paramétrique qui relie la vitesse du vent et la distance du plan de mesure.

3. Procédé de détermination d'un facteur d'induction selon la revendication 2, dans lequel ladite fonction paramétrique est une fonction polynomiale, de préférence une fonction polynomiale d'ordre deux, ou une fonction affine par morceaux.

4. Procédé de détermination d'un facteur d'induction selon l'une des revendications précédentes, dans lequel le modèle

$$\begin{cases} x(k) & = x(k-1) + \mu(k) \\ y(k) & = Hx(k) + \epsilon(k) \end{cases}$$

d'état mis en oeuvre dans ledit filtre de Kalman s'écrit : avec k le temps discret, x le vecteur comprenant les coefficients de ladite fonction paramétrique, y le vecteur des vitesses du vent dans lesdits au moins deux plans de mesure, H une matrice dépendante des distances desdits au moins deux plans de mesure et définie en fonction de ladite fonction paramétrique, $\mu$ la variation des coefficients de ladite fonction paramétrique, et $\epsilon$ un vecteur des bruits de mesure.

5. Procédé de détermination d'un facteur d'induction selon la revendication 4, dans lequel ladite fonction paramétrique est une fonction polynomiale qui s'écrit : $f(r_i) = c_2 r_i^2 + c_1 r_i + c_0$ avec $r_i$ la distance du plan de mesure i, f ladite fonction paramétrique, $C_0, C_1, C_2$ lesdits coefficients de ladite fonction paramétrique, et dans lequel la matrice

$$H = \begin{bmatrix} r_1^2 & r_1 & 1 \\ \dots & \dots & \dots \\ r_n^2 & r_n & 1 \end{bmatrix}$$

H s'écrit avec n le nombre de plans de mesures pour lequel des mesures ont été réalisées.

6. Procédé de détermination d'un facteur d'induction selon l'une des revendications précédentes, dans lequel on détermine ledit facteur d'induction en appliquant ledit filtre de Kalman adaptatif au modèle d'état suivant :

$$\begin{cases} a_{r_i,r_j}(k) & = a_{r_i,r_j}(k-1) + \xi(k-1) \\ u_{r_i}(k) & = u_{r_j}(k)a_{r_i,r_j}(k) + \nu(k) \end{cases}$$

avec $v(k) = -\varepsilon_{r_i}(k) + \varepsilon_{r_j}(k)a_{r_i,r_j}(k)$ et k le temps discret, $r_i$, la distance du plan de mesure i, $r_j$ la distance du plan de mesure j, $a_{r_i,r_j}$ le facteur d'induction entre le plan de mesure i et le plan de mesure j, $u_{r_i}$ la vitesse du vent dans le plan i, $u_{r_j}$ la vitesse du vent dans le plan j, $\xi$ la variation du facteur d'induction dans le temps, $\varepsilon_{r_i}$ le bruit de la vitesse du vent dans le plan de mesure i $u_{r_i}$, $\varepsilon_{r_j}$ le bruit de la vitesse du vent dans le plan de mesure j $u_{r_j}$.

7. Procédé de contrôle d'une éolienne (1) équipée d'un capteur LiDAR (2), **caractérisé en ce qu'**on met en oeuvre les étapes suivantes :

a) on détermine ledit facteur d'induction entre un plan de mesure et le plan de rotor d'une éolienne au moyen du procédé selon l'une des revendications précédentes ; et
b) on contrôle ladite éolienne (1) en fonction dudit facteur d'induction entre le plan de mesure considéré et le plan de rotor de l'éolienne.

8. Procédé de diagnostic et/ou surveillance d'une éolienne équipée d'un capteur LiDAR, **caractérisé en ce qu'**on met en oeuvre les étapes suivantes :

a) on détermine un facteur d'induction du vent entre un plan de mesure (PM) et le plan de rotor (PR) d'une éolienne (1) au moyen du procédé selon l'une des revendications 1 à 6 ;
b) on détermine la puissance aérodynamique prélevée au vent par ladite éolienne (1) au moyen dudit facteur d'induction déterminé du vent entre un plan de mesure (PM) et le plan de rotor (PR) d'une éolienne (1) ; et
c) on diagnostique et/ou surveille le fonctionnement de ladite éolienne (1) au moyen de ladite puissance aérodynamique prélevée déterminée.

9. Produit programme d'ordinateur **caractérisé en ce qu'**il comprend des instructions de code agencés pour mettre en oeuvre les étapes d'un procédé selon l'une des revendications précédentes, lorsque le programme est exécuté sur une unité de traitement dudit capteur LiDAR (2).

10. Capteur LiDAR (2) pour éolienne **caractérisé en ce qu'**il comprend une unité de traitement mettant en oeuvre un procédé selon l'une des revendications 1 à 8.

11. Eolienne (1) **caractérisée en ce qu'**elle comporte un capteur LiDAR (2) selon la revendication 10, ledit capteur LiDAR (2) étant de préférence placé sur la nacelle de ladite éolienne (1) ou dans le nez de l'éolienne (1).

**Patentansprüche**

1. Verfahren zur Bestimmung eines Induktionsfaktors zwischen einer Messebene (PM) und der Ebene des Rotors (PR) einer Windkraftanlage (1), wobei die Windkraftanlage (1) mit einem LiDAR-Sensor (2) ausgerüstet ist, der eine Messung in Bezug auf die Windgeschwindigkeit in wenigstens zwei Messebenen (PM) der Windkraftanlage durchführt, die von der Windkraftanlage entfernt sind, wobei der Induktionsfaktor des Winds einen Bremskoeffizienten des Winds zwischen zwei beabstandeten Punkten stromauf der Windkraftanlage repräsentiert, wobei sich die Bremsung aus dem Betrieb der Windkraftanlage (1) im Windfeld ergibt, **dadurch gekennzeichnet, dass** die folgenden Schritte durchgeführt werden:

a. Es wird die Windgeschwindigkeit in wenigstens zwei Messebenen (PM), die von der Windkraftanlage (1) entfernt sind, mittels des LiDAR-Sensors (2) gemessen (MES);
b. Es wird die Windgeschwindigkeit in der Ebene des Rotors (PR) mittels der Messungen der Windgeschwindigkeit in wenigstens zwei Messebenen (PM) und eines Kalman-Filters (KAL 1) bestimmt; und
c. Es wird der Induktionsfaktor des Winds zwischen einer Messebene (PM) und der Ebene des Rotors (PR) mittels der in der Ebene des Rotors (PR) bestimmten Windgeschwindigkeit, der Messung der Windgeschwindigkeit in der betreffenden Messebene (PM) und mittels eines adaptiven Kalman-Filters (KAL 2) bestimmt.

**2.** Verfahren zur Bestimmung eines Induktionsfaktors nach Anspruch 1, wobei die Windgeschwindigkeit in der Ebene des Rotors (PR) mittels eines Kalman-Filters (KAL 1) bestimmt wird, der auf eine parametrische Funktion angewandt wird, die die Windgeschwindigkeit und den Abstand der Messebene in Verbindung bringt.

**3.** Verfahren zur Bestimmung eines Induktionsfaktors nach Anspruch 2, wobei die parametrische Funktion eine Polynomfunktion ist, vorzugsweise eine Polynomfunktion zweiter Ordnung oder eine stückweise affine Funktion.

**4.** Verfahren zur Bestimmung eines Induktionsfaktors nach einem der vorhergehenden Ansprüche, wobei das Zustandsmodell, das im Kalman-Filter verwendet wird, wie folgt geschrieben wird:

$$\begin{cases} x(k) = x(k-1) + \mu(k) \\ y(k) = Hx(k) + \epsilon(k) \end{cases}$$

wobei k die diskrete Zeit ist, x der Vektor ist, der die Koeffizienten der parametrischen Funktion umfasst, y der Vektor der Windgeschwindigkeiten in den wenigstens zwei Messebenen ist, H eine Matrix ist, die von den Abständen der wenigstens zwei Messebenen abhängig ist und in Abhängigkeit von der parametrischen Funktion definiert ist, $\mu$ die Variation der Koeffizienten der parametrischen Funktion ist und $\epsilon$ ein Vektor des Messrauschens ist.

**5.** Verfahren zur Bestimmung eines Induktionsfaktors nach Anspruch 4, wobei die parametrische Funktion eine Polynomfunktion ist, die wie folgt geschrieben wird:

$$f(r_i) = c_2 r_i^2 + c_1 r_i + c_0$$

wobei $r_i$ der Abstand der Messebene i ist, f die parametrische Funktion ist, $C_0$, $C_1$, $C_2$ die Koeffizienten der parametrischen Funktion sind und wobei die Matrix H wie folgt geschrieben wird

$$H = \begin{bmatrix} r_1^2 & r_1 & 1 \\ ... & ... & ... \\ r_n^2 & r_n & 1 \end{bmatrix}$$

wobei n die Anzahl von Messebenen ist, für welche die Messungen durchgeführt wurden.

**6.** Verfahren zur Bestimmung eines Induktionsfaktors nach einem der vorhergehenden Ansprüche, wobei der Induktionsfaktor unter Anwendung des adaptiven Kalman-Filters auf das folgende Zustandsmodell bestimmt wird:

$$\begin{cases} a_{ri,rj}(k) = a_{ri,rj}(k-1) + \xi(k-1) \\ u_{ri}(k) = u_{ri}(k)a_{ri,rj}(k) + v(k) \end{cases}$$

wobei

$$v(k) = -\epsilon_{ri}(k) + \epsilon_{rj}(k)a_{ri,rj}(k)$$

und k die diskrete Zeit ist, $r_i$ der Abstand der Messebene i ist, $r_j$ der Abstand der Messebene j ist, $a_{ri,rj}$ der Induktionsfaktor zwischen der Messebene i und der Messebene j ist, $u_{ri}$ die Windgeschwindigkeit in der Ebene i ist, $u_{rj}$ die Windgeschwindigkeit in der Ebene j ist, $\xi$ die Variation des Induktionsfaktors mit der Zeit ist, $\epsilon_{ri}$ das Rauschen der Windgeschwindigkeit in der Messebene i $u_{ri}$ ist, $\epsilon_{rj}$ das Rauschen der Windgeschwindigkeit in der Messebene j $u_{rj}$ ist.

**7.** Verfahren zur Steuerung einer Windkraftanlage (1), die mit einem LiDAR-Sensor (2) ausgerüstet ist, **dadurch gekennzeichnet, dass** die folgenden Schritte durchgeführt werden:

a) es wird der Induktionsfaktor zwischen einer Messebene und der Rotorebene einer Windkraftanlage mittels des Verfahrens nach einem der vorhergehenden Ansprüche bestimmt; und
b) es wird die Windkraftanlage (1) in Abhängigkeit von dem Induktionsfaktor zwischen der betreffenden Messebene und der Rotorebene der Windkraftanlage gesteuert.

8. Verfahren zur Diagnose- und/oder Überwachung einer Windkraftanlage, die mit einem LiDAR-Sensor ausgerüstet ist, **dadurch gekennzeichnet, dass** die folgenden Schritte durchgeführt werden:

a) es wird der Induktionsfaktor des Winds zwischen einer Messebene (PM) und der Rotorebene (PR) einer Windkraftanlage (1) mittels des Verfahrens nach einem der Ansprüche 1 bis 6 bestimmt;
b) es wird die aerodynamische Leistung, die dem Wind durch die Windkraftanlage (1) entnommen wird, mittels des bestimmten Induktionsfaktors des Winds zwischen einer Messebene (PM) und der Rotorebene (PR) einer Windkraftanlage (1) bestimmt; und
c) es wird der Betrieb der Windkraftanlage (1) mittels der bestimmten entnommenen aerodynamischen Leistung diagnostiziert und/oder überwacht.

9. Computerprogrammprodukt, **dadurch gekennzeichnet, dass** es Code-Anweisungen umfasst, die dafür angeordnet sind, die Schritte eines Verfahrens nach einem der vorhergehenden Ansprüche durchzuführen, wenn das Programm auf einer Verarbeitungseinheit des LiDAR-Sensors (2) ausgeführt wird.

10. LiDAR-Sensor (2) für eine Windkraftanlage, **dadurch gekennzeichnet, dass** er eine Verarbeitungseinheit umfasst, die ein Verfahren nach einem der Ansprüche 1 bis 8 durchführt.

11. Windkraftanlage (1), **dadurch gekennzeichnet, dass** sie einen LiDAR-Sensor (2) nach Anspruch 10 aufweist, wobei der LiDAR-Sensor (2) vorzugsweise auf der Gondel der Windkraftanlage (1) oder in der Nase der Windkraftanlage (1) platziert ist.

**Claims**

1. Method for determining an induction factor between a measurement plane (PM) and the plane (PR) of the rotor of a wind turbine (1), said wind turbine (1) being equipped with a lidar sensor (2) that takes a measurement relative to wind speed for at least two measurement planes (PM) distant from said wind turbine, said wind induction factor representing a wind braking coefficient between two spaced-apart points upstream of said wind turbine, the braking resulting from the operation of said wind turbine (1) in the wind field, **characterized in that** the following steps are implemented:

a. wind speed is measured (MES) for at least two measurement planes (PM) distant from said wind turbine (1) by means of said lidar sensor (2);
b. wind speed in said plane (PR) of the rotor is determined by means of said measurements of said wind speed for at least two measurement planes (PM) and of a Kalman filter (KAL 1); and
c. said wind induction factor between a measurement plane (PM) and said plane (PR) of the rotor is determined by means of said determined wind speed in said plane (PR) of the rotor and of the measurement of wind speed in said measurement plane (PM) in question, and by means of an adaptive Kalman filter (KAL 2).

2. Method for determining an induction factor according to Claim 1, wherein the wind speed in said plane (PR) of the rotor is determined by means of a Kalman filter (KAL 1) applied to a parametric function that relates the wind speed and the distance of the measurement plane.

3. Method for determining an induction factor according to Claim 2, wherein said parametric function is a polynomial function, preferably a polynomial function of order two, or a piecewise affine function.

4. Method for determining an induction factor according to one of the preceding claims, wherein, the state model implemented in said Kalman filter is written:

$$\begin{cases} x(k) &= x(k-1) + \mu(k) \\ y(k) &= Hx(k) + \epsilon(k) \end{cases}$$

with k discrete time, x the vector containing the coefficients of said parametric function, y the vector of the wind speeds in said at least two measurement planes, H a matrix dependent on the distances of said at least two measurement planes and defined depending on said parametric function, $\mu$ the variation in the coefficients of said parametric function, and $\varepsilon$ a vector of measurement noise.

5. Method for determining an induction factor according to Claim 4, wherein said parametric function is a polynomial function that is written:

$$f(r_i) = c_2 r_i^2 + c_1 r_i + c_0$$

with $r_i$ the distance of measurement plane i, f said parametric function, and $C_0$, $C_1$ and $C_2$ said coefficients of said parametric function, and wherein the matrix H is written

$$H = \begin{bmatrix} r_1^2 & r_1 & 1 \\ ... & ... & ... \\ r_n^2 & r_n & 1 \end{bmatrix}$$

with n the number of measurement planes for which measurements were carried out.

6. Method for determining an induction factor according to one of the preceding claims, wherein said induction factor is determined by applying said adaptive Kalman filter to the following state model:

$$\begin{cases} a_{r_i,r_j}(k) &= a_{r_i,r_j}(k-1) + \xi(k-1) \\ u_{r_i}(k) &= u_{r_j}(k)a_{r_i,r_j}(k) + \nu(k) \end{cases}$$

with

$$\nu(k) = -\epsilon_{r_i}(k) + \epsilon_{r_j}(k)a_{r_i,r_j}(k)$$

and k discrete time, $r_i$ the distance of measurement plane i, $r_j$ the distance of measurement plane j, $a_{r_i,r_j}$ the induction factor between measurement plane i and measurement plane j, $u_{r_i}$ the wind speed in plane i, $u_{r_j}$ the wind speed in plane j, $\xi$ the variation in the induction factor over time, $\varepsilon_{r_i}$ the noise of the wind speed $u_{r_i}$ in measurement plane i, and $\varepsilon_{r_j}$ the noise of the wind speed $u_{r_j}$ in measurement plane j.

7. Method for controlling a wind turbine (1) equipped with a lidar sensor (2), **characterized in that** the following steps are implemented:

   a) said induction factor between a measurement plane and the rotor plane of a wind turbine is determined by means of the method according to one of the preceding claims; and
   b) said wind turbine (1) is controlled depending on said induction factor between the measurement plane in question and the rotor plane of the wind turbine.

8. Method for diagnosing and/or monitoring a wind turbine equipped with a lidar sensor, **characterized in that** the following steps are implemented:

   a) a wind induction factor between a measurement plane (PM) and the rotor plane (PR) of a wind turbine (1) is determined by means of the method according to one of Claims 1 to 6;
   b) the aerodynamic power drawn from the wind by said wind turbine (1) is determined by means of said determined wind induction factor between a measurement plane (PM) and the rotor plane (PR) of a wind turbine (1); and

c) the operation of said wind turbine (1) is diagnosed and/or monitored by means of said determined drawn aerodynamic power.

9. Computer program product **characterized in that** it comprises code instructions arranged to implement the steps of a method according to one of the preceding claims, when the program is executed on a processing unit of said lidar sensor (2).

10. Wind-turbine lidar sensor (2) **characterized in that** it comprises a processing unit that implements a method according to one of Claims 1 to 8.

11. Wind turbine (1) **characterized in that** it comprises a lidar sensor (2) according to Claim 10, said lidar sensor (2) preferably being placed on the nacelle of said wind turbine (1) or in the nose cone of the wind turbine (1) .

[Fig 1]

[Fig 2]

[Fig 3]

[Fig 4]

```
┌───────┐      ┌───────┐  u_r0  ┌───────┐   a   ┌───────┐      ┌───────┐
│  MES  │─────▶│ KAL1  │──────▶│ KAL2  │─────▶│  PUI  │─────▶│  DIA  │
└───────┘      └───────┘       └───────┘       └───────┘      └───────┘
    │                             ▲               ▲
    │                             │               │
    └─────────────────────────────┴───────────────┘
```

[Fig 5]

[Fig 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- FR 3088434
- US 20200149512 A
- EP 3564524 A1
- FR 3068139
- US 20200124026 A
- FR 2976630 A1
- US 20120321463 A

**Littérature non-brevet citée dans la description**

- **EMMANUEL SIMON PIERRE BRANLARD ; ALEXANDER RAUL MEYER FORSTING.** Using a cylindrical vortex model to assess the induction zone infront of aligned and yawed rotors. *EWEA Offshore 2015 Conférence. European Wind Energy Association (EWEA),* 2015
- **D MEDICI ; STEFAN IVANELL ; J-À DAHLBERG ; P HENRIK ALFREDSSON.** The upstream flow of a wind turbine: blockage effect. *Wind Energy,* 2011, vol. 14 (5), 691-697
- **ERIC SIMLEY ; NIKOLAS ANGELOU ; TORBEN MIKKELSEN ; MIKAEL SJÖHOLM ; JAKOB MANN ; LUCY Y PAO.** Characterization of wind velocities in the upstream induction zone of a wind turbine using scanning continuous-wave lidars. *Journal of Renewable and Sustainable Energy,* 2016, vol. 8 (1), 013301
- **NIELS TROLDBORG ; ALEXANDER RAUL MEYER FORSTING.** A simple model of the wind turbine induction zone derived from numerical simulations. *Wind Energy,* 2017, vol. 20 (12), 2011-2020
- **RABIA SHAKOOR ; MOHAMMAD YUSRI HASSAN ; ABDUR RAHEEM ; YUAN-KANG WU.** Wake effect modeling: A review of wind farm layout optimization using Jensen's model. *Renewable and Sustainable Energy Reviews,* Mai 2016, vol. 58, 1048-1059